## Europäisches Patentamt
## European Patent Office
## Office européen des brevets

(11) Veröffentlichungsnummer: **0 055 813**
**B1**

(12) **EUROPÄISCHE PATENTSCHRIFT**

(45) Veröffentlichungstag der Patentschrift:
**31.07.85**

(51) Int. Cl.⁴: **F 16 K 17/38,** F 16 K 17/02

(21) Anmeldenummer: **81108999.4**

(22) Anmeldetag: **27.10.81**

(54) **Thermisch gesteuertes Sicherheitsventil.**

(30) Priorität: **03.11.80 DE 3041261**

(43) Veröffentlichungstag der Anmeldung:
**14.07.82 Patentblatt 82/28**

(45) Bekanntmachung des Hinweises auf die Patenterteilung:
**31.07.85 Patentblatt 85/31**

(84) Benannte Vertragsstaaten:
**AT DE FR IT NL SE**

(56) Entgegenhaltungen:
**AT - B - 341 843**
**DE - A - 1 500 118**
**DE - A - 2 049 033**
**DE - A - 2 658 721**
**DE - B - 2 451 346**
**US - A - 3 084 901**

(73) Patentinhaber: **HANS SASSERATH & CO KG,
Mühlenstrasse 100, D-4052 Korschenbroich 1 (DE)**

(72) Erfinder: **Sasserath, Arend, Dahiener Strasse 693,
D-4050 Mönchengladbach 2 (DE)**
Erfinder: **Hecking, Willi, Andreasstrasse 21,
D-4050 Mönchengladbach 2 (DE)**

(74) Vertreter: **Wolgast, Rudolf, Dipl.-Chem. Dr. et al,
Dipl.-Phys. Jürgen Weisse Dipl.Chem. Dr. Rudolf Wolgast
Bökenbusch 41 Postfach 11 03 86,
D-5620 Velbert 11 Langenberg (DE)**

BUNDESDRUCKEREI BERLIN

**Beschreibung**

Die Erfindung betrifft ein thermisch gesteuertes, eigensicheres Sicherheitsventil für eine Warmwasserheizungsanlage, welches bei Übertemperatur öffnet, enthaltend:

(a) ein Ventilgehäuse mit einem Einlaß und einem Auslaß und mit einem dazwischen befindlichen Ventilsitz,

(b) einen im Ventilgehäuse geführten Ventilschließkörper, welcher einen mit dem Ventilsitz zusammenwirkenden Ventilteller aufweist,

(c) eine den Ventilschließkörper belastende Schließfeder,

(d) einen gegen eine Feder ausdehnbaren Dehnkörper, durch den der Ventilschließkörper im öffnenden Sinne bewegbar ist und mit dem ein auf Dampfdruckbasis arbeitender Temperaturfühler starr verbunden ist, und

(e) eine Eigensicherheitseinrichtung, durch welche bei einem Defekt des Temperaturfühlers, der zu einem Zusammenbruch des Drucks im Dehnkörper führt, der Ventilschließkörper mit dem Ventilteller in eine Offenstellung bewegbar ist, in welcher der Ventilteller von dem Ventilsitz abgehoben ist.

Ein solches Sicherheitsventil ist zum Einbau in geschlossenen Heizungsanlagen vorgesehen und dient als »thermische Ablaufsicherung«, die verhindert, daß bei Überhitzung ein Überdruck in der Heizungsanlage entsteht. Während bei Heizungsanlagen, die mit flüssigen oder gasförmigen Brennstoffen betrieben werden, die Wärmezufuhr zur Heizungsanlage leicht regelbar ist, ist die Regelung der Wärmezufuhr in Heizungsanlagen, die mit festen Brennstoffen betrieben werden, nicht so leicht möglich, so daß in diesen Fällen an die Sicherheit der Funktion des Sicherheitsventils ganz besondere Anforderungen gestellt werden. Insbesondere wird in solchen und ähnlichen Anwendungsfällen bei thermisch gesteuerten Sicherheitsventilen eine doppelte Sicherung oder ein eigensicheres Sicherheitsventil verlangt, das ist ein Sicherheitsventil, das bei Versagen der thermischen Steuerung ebenfalls anspricht.

Ein solches thermisch gesteuertes, eigensicheres Sicherheitsventil ist bekannt durch die DE-A-2 049 033. Dort weist die Eigensicherheitseinrichtung eine auf den Dehnkörper entgegen seiner Dehnrichtung einwirkende Gegenfeder sowie eine mittels einer Verriegelungseinrichtung unter Vorspannung gehaltene Öffnungsfeder auf. Die Kraftwirkung der Öffnungsfeder ist derjenigen der Schließfeder entgegengerichtet und in der Lage, bei Auslösen der Verriegelungseinrichtung die Kraftwirkung der Schließfeder zu überwinden. Die Verriegelungseinrichtung wird ausgelöst, wenn die Gegenfeder durch Fortfall des Druckes in dem Dehnkörper entspannt wird.

Die Öffnungsfeder wird dann durch ein Verbindungsglied mit dem Verschlußkörper gekoppelt und hebt den Ventilteller gegen die Wirkung der Schließfeder von seinem Sitz ab.

Es wird daher das Sicherheitsventil nicht nur bei Übertemperatur durch den Dehnkörper aufgedrückt sondern durch die Öffnungsfeder auch dann, wenn das System des Druckfühlers undicht wird und der Druck im Dehnkörper wegfällt. Die Eigensicherheitseinrichtung ist dort eine relativ komplizierte und störanfällige Mechanik mit einer vorgespannten starken Öffnungsfeder und einer Verriegelungseinrichtung.

Der Erfindung liegt die Aufgabe zugrunde, bei einem thermisch gesteuerten, eigensicheren Sicherheitsventil der eingangs definierten Art die Eigensicherheitseinrichtung ohne eine solche Mechanik einfach und betriebssicher zu gestalten.

Erfindungsgemäß wird diese Aufgabe dadurch gelöst, daß:

(f) zur Bildung der Eigensicherheitseinrichtung der Ventilschließkörper mit einer Membran verbunden ist, welche in dem Ventilgehäuse eine mit dem Auslaß verbundene erste Kammer und eine zweite Kammer voneinander trennt, die über eine Drosselstelle miteinander in Verbindung stehen, und

(g) durch den Dehnkörper ein Absperrglied steuerbar ist, das eine Verbindung zwischen dem Einlaß und der zweiten Kammer beherrscht und bei Zusammenbruch des Drucks im Dehnkörper diese Verbindung freigibt.

Das Öffnen des Sicherheitsventils beim Ausfall des Druckfühlersystems erfolgt dann durch die Membran, wobei der Eingangsdruck im System der Warmwasserheizungsanlage über die Membran als hydraulische Hilfskraft dient. Diese hydraulische Hilfskraft wird durch den Dehnkörper über ein Absperrglied gesteuert.

Ausgestaltungen der Erfindung sind Gegenstand der Patentansprüche 2 bis 7.

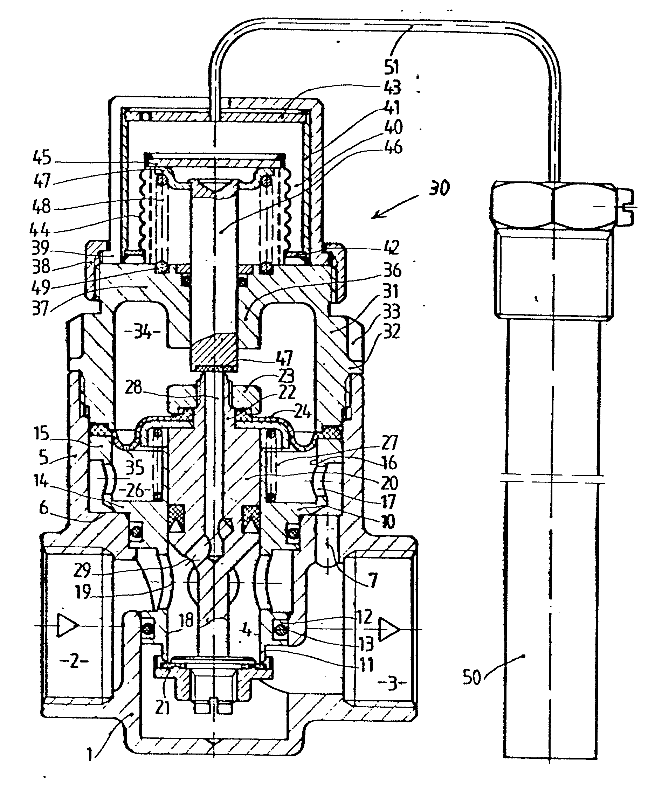

Ein Ausführungsbeispiel eines thermisch gesteuerten, eigensicheren Sicherheitsventils ist in der Figur im Längsschnitt dargestellt und nachstehend näher erläutert:

Das Sicherheitsventil besteht aus einem Anschlußteil 1, einem Einsatz 10 mit einem Ventilsitz 11, einem axial in dem Einsatz 10 geführten Ventilschließkörper 20 und einer Sicherheitseinrichtung, die ein geschlossenes Bauteil 30 bildet. Zwischen dem Einsatz 10 und dem Bauteil 30 ist eine Membran 24 eingespannt, die an dem ventilabgewandten Ende des Ventilschließkörpers 20 befestigt ist. Das Anschlußteil 1 bildet dabei zusammen mit dem Einsatz 10 und dem Bauteil 30 das Ventilgehäuse.

Im einzelnen besteht das Anschlußteil 1 aus einem Einlaß 2 und einem Auslaß 3, zwischen denen ein Durchlaß 4 gebildet ist. Einlaß 2 und Auslaß 3 sind mit Gewinde zum Anschluß an Rohrleitungen versehen. Seitlich und senkrecht zur allgemeinen Durchflußrichtung trägt das Anschlußteil 1 einen Ansatz 5, der an seinem äußeren Ende mit Innengewinde versehen ist und innenseitig eine Ringschulter 6 bildet. Nach der Seite des Einlasses 2 ist der Ansatz 5 offen. Auf der Seite des Auslasses 3 ist die Ringschulter 6 mit dem Durchlaß 4 verbunden; auf dieser Seite erstreckt sich auch ein Durchgangskanal 7 durch die Ringschulter 6.

Der Einsatz 10 bildet an einem Ende den Ventilsitz 11 und ist mit diesem Ende unter Zwischenlage eines in eine Umfangsnut 12 eingelegten Dichtungsringes 13 abdichtend in den Durchlaß 4 eingesetzt. Das andere Ende des Einsatzes 10 hat einen vergrößerten Durchmesser und ist durch eine Stufe 14, die der Ringschulter 6 aufliegt, von dem ventilsitzseitigen einen Ende des Einsatzes 10 getrennt. Einer Abstufung in der Ringschulter 6 liegt der Einsatz 10 unter Zwischenlage eines Dichtringes an. Das vergrößerte Ende des Einsatzes 10 ist mit einem Ringflansch 15 versehen, der an den Innendurchmesser des Ansatzes 5 angepaßt ist und diesem im Abstand von dessen Innengewinde anliegt. Von oben her ist der Einsatz 10 mit einer ringförmigen, konzentrischen Ausnehmung 16 versehen, die über Durchbrüche 17 mit dem Raum oberhalb der Ringschulter 6 verbunden ist. Durch den Einsatz 10 verläuft koaxial eine Innenbohrung 18, die über vier gegeneinander versetzte, nahe dem Durchlaß 4 angeordnete Durchtrittsöffnungen 19 mit dem Einlaß 2 verbunden ist.

Ein Ventilschließkörper 20 ist in der Innenbohrung 18 des Einsatzes 10 abdichtend und gleitbeweglich geführt. Ein verjüngtes Ende des Ventilschließkörpers 20 verläuft durch den Ventilsitz 11 hindurch und trägt einen mit diesem zusammenwirkenden Ventilteller 21. Das andere Ende des Ventilschließkörpers 20 ragt ein Stück über den Einsatz 10 hinaus und bildet ein verjüngtes Anschlagteil 22, auf dessen Außengewinde ein Haltering 23 aufgeschraubt ist. Durch den Haltering 23 werden der Innenrand einer Membran 24, deren Außenrand dem Ringflansch 15 des Einsatzes 10 aufliegt, und ein Federteller 25 in Anlage an dem Absatz des Ventilschließkörpers 20 gehalten, der an dem Übergang zu dem verjüngten Anschlagteil 22 ausgebildet ist. Die Membran 24 schließt so die ringförmige Ausnehmung 16 in dem Einsatz 10 unter Ausbildung einer ventilsitzseitigen ersten Kammer 26 ab, an deren Boden sich eine an dem Federteller 25 angreifende und dadurch den Ventilschließkörper 20 in Schließrichtung vorbelastende Schließfeder 27 abstützt.

Ein koaxial durch den Ventilschließkörper 20 verlaufender Innenkanal 28 mündet in den Anschlagteil 22 und endet in dem Bereich, in dem sich der Ventilschließkörper 20 verjüngt, in einem Querkanal 29, der sich zur Innenbohrung 18 des Einsatzes 10 und damit zum Einlaß 2 des Sicherheitsventils öffnet.

Die Sicherheitseinrichtung bildet ein geschlossenes Bauteil 30. Dieser besteht zunächst aus einem becherförmigen Anschlußkörper 31, der außenseitig mit einem Gewinde und einem daran anschließenden Anschlagring 32, sowie mit einer Angriffsfläche 33 für ein Werkzeug versehen ist. Der Anschlußkörper 31 ist in das Innengewinde am äußeren Ende des Ansatzes 5 eingeschraubt und liegt mit seiner Stirnseite dem Außenrand der Membran 24 auf. Die Membran 24 ist so zwischen den Ringflansch 15 des Einsatzes 10 und den Rand des Anschlußkörpers 31 eingespannt, und es entsteht eine ventilsitzabgewandte, zweite Kammer 34. Die zweite Kammer 34 steht über eine Drosselstelle 35, die von einer relativ engen Verbindungsbohrung in der Membran 24 gebildet wird, mit der ersten Kammer 26 in Verbindung. Der Boden des Anschlußkörpers 31 enthält eine in das Innere der zweiten Kammer 34 vorspringende Führung 36, die koaxial verläuft und zu dem Ventilschließkörper 20 ausgerichtet ist.

Ein zurückspringender Teil 37 des Bodens des Anschlußkörpers 31 trägt ein Außengewinde, auf das eine Überwurfmutter 38 aufgeschraubt ist. Diese Überwurfmutter 38 greift über einen Ringflansch 39 am offenen Rand einer becherförmigen Druckkammer 40, die eine weitere Komponente des Bauteils 30 bildet. In der Druckkammer 40 ist ein Innenmantel 41 angeordnet, an dessen eines Ende eine Halterung 42 angeschweißt ist und dessen anderes Ende durch eine Anschlagscheibe 43 abgeschlossen ist, die den Boden der Druckkammer 40 bedeckt. An der Halterung 42 befindet sich ein koaxial in der Druckkammer 40 angeordnetes Federgehäuse 44 in Gestalt eines Wellrohrelementes, das am gegenüberliegenden Ende mit einem damit druckdicht verbundenen, beispielsweise verschweißten Deckel 45 verschlossen ist. Ein Druckstößel 46 erstreckt sich durch die Führung 36 teils in die zweite Kammer 34, teils in das Federgehäuse 44. Das erste Ende des Druckstößels 46 trägt eine Dichtfläche 47 und liegt mit dieser dem verjüngten Anschlagteil 22 des Ventilschließkörpers 20 an; das zweite Ende des Druckstößels 46 trägt einen Federteller 47, der unter der Wirkung einer Feder 48 steht, die sich in einer Ringnut 49 im zurückspringenden Teil 37 des Bodens des Anschlußkörpers 31 abstützt und den Druckstößel 46 in Abhubrichtung von dem Anschlagteil 22 vorbelastet. Der Druckstößel 46 ist durch in den zurückspringenden Teil 37 des Anschlußkörpers 31 eingesetzte Dichtelemente abdichtend in der Führung 36 geführt.

Eine temperaturabhängig druckerzeugende Übertemperatursicherung 50 in Gestalt eines Meßfühlers ist an geeigneter Stelle in die Heizungsanlage eingebaut und über eine Druckkapillare 51, die druckdicht in den Boden der Druckkammer 40 und die Anschlagscheibe 43 eingeführt ist, mit der Druckkammer 40 verbunden.

Das vorstehend beschriebene, in Schließstellung dargestellte Sicherheitsventil arbeitet wie folgt:

Im normalen Betriebszustand am Meßfühler 50 hält der darin entwickelte Druck der Feder 48 in der Weise die Waage, daß der Druckstößel 46 dem Anschlagteil 22 des Ventilschließkörpers 20 anliegt und die Verbindung zwischen der zweiten Kammer 34 und dem Einlaß 2 unterbrochen ist. Der Druck in der Druckkammer 40 reicht nicht aus, um den Druck der Schließfeder 27 zu überwinden, so daß der Ventilteller 21 in dichtender Anlage an dem Ventilsitz 11 gehalten und der Durchlaß 4 geschlossen ist.

Bei Überhitzung wächst der im Meßfühler 50 erzeugte Druck und wird über die Druckkapillare 51 auf die Druckkammer 40 übertragen. Übersteigt der Druck in der Druckkammer 40 einen im wesentlichen durch die Schließfeder 27 bestimmten oberen Grenzwert, so wird das Federgehäuse 44 mit der Feder 48 zusammengedrückt und der Druckstößel 46 und damit der Ventilschließkörper 20 gegen die Kraft der Schließfeder 27 verschoben und der Ventilteller 21 unter Freigabe des Durchlasses 4 von dem Ventilsitz 11 abgehoben. Dadurch wird die eingangs erwähnte thermische Ablaufsicherung ausgelöst. Bei Abnahme der Übertemperatur geht der Druck in dem Meßfühler 50 und damit der in der Druckkammer 40 wirksame Druck wieder zurück, und der Ventilschließkörper 27 und mit ihm der Druckstößel 46 und das Federgehäuse 44 kehren wieder in die dargestellte Ausgangsstellung zurück, in der der Ventilteller 21 dem Ventilsitz 11 abdichtend anliegt.

Die Eigensicherung des Sicherheitsventils soll bewirken, daß trotz Ausfall des Meßfühlers 50, Bruch der Druckkapillare 51 oder dergl., die Entstehung einer Übertemperatur in der Heizungsanlage sicher verhindert wird. Dies wird dadurch erreicht, daß in einem solchen Fall die Feder 48 voll wirksam wird und das Federgehäuse 44 unter Mitnahme des Druckstößels 46 sich bis zur Anschlagscheibe 43 ausdehnt. Der Druckstößel 46 hebt dadurch von dem Anschlagteil 22 ab und gibt die Mündung des Innenkanals 28 und damit eine Verbindung vom Einlaß 2 zur zweiten Kammer 34 frei. Da die zweite Kammer 34 nur über die Drosselstelle 35 mit der ersten Kammer 26 und (über die Durchtrittsöffnungen 17 und den Durchgangskanal 7) mit dem Auslaß 3 verbunden ist, kann sich an der Membran 24 ein Druck aufbauen, der ausreicht, um die Kraft der Schließfeder 27 zu überwinden und den Ventilschließkörper 20 mit dem Ventilteller 21 unter Öffnung des Durchlasses 4 vom Ventilsitz 11 abzuheben.

**Patentansprüche**

1. Thermisch gesteuertes, eigensicheres Sicherheitsventil für eine Warmwasserheizungsanlage, welches bei Übertemperatur öffnet, enthaltend:

(a) ein Ventilgehäuse mit einem Einlaß (2) und einem Auslaß (3) und mit einem dazwischen befindlichen Ventilsitz (11),

(b) einen im Ventilgehäuse geführten Ventilschließkörper 20, welcher einen mit dem Ventilsitz (11) zusammenwirkenden Ventilteller (21) aufweist,

(c) eine den Ventilschließkörper (20) belastende Schließfeder (27),

(d) einen gegen eine Feder (48) ausdehnbaren Dehnkörper (40), durch den der Ventilschließkörper (20) im öffnenden Sinne bewegbar ist und mit dem ein auf Dampfdruckbasis arbeitender Temperaturfühler (50) starr verbunden ist, und

(e) eine Eigensicherheitseinrichtung, durch welche bei einem Defekt des Temperaturfühlers (50), der zu einem Zusammenbruch des Drucks im Dehnkörper (40) führt, der Ventilschließkörper (20) mit dem Ventilteller (21) in eine Offenstellung bewegbar ist, in welcher der Ventilteller (21) von dem Ventilsitz (11) abgehoben ist,

dadurch gekennzeichnet, daß:

(f) zur Bildung der Eigensicherheitseinrichtung der Ventilschließkörper (20) mit einer Membran (24) verbunden ist, welche in dem Ventilgehäuse eine mit dem Auslaß (3) verbundene erste Kammer (26) und eine zweite Kammer (34) voneinander trennt, die über eine Drosselstelle (35) miteinander in Verbindung stehen, und

(g) durch den Dehnkörper (40) ein Absperrglied (46) steuerbar ist, das eine Verbindung zwischen dem Einlaß (2) und der zweiten Kammer (34) beherrscht und bei Zusammenbruch des Drucks im Dehnkörper (40) diese Verbindung freigibt.

2. Sicherheitsventil nach Anspruch 1, dadurch gekennzeichnet, daß

(a) der Dehnkörper eine Druckkammer (40) aufweist, die an dem vom Ventilsitz (11) abgewandten Ende des Ventilgehäuses angeordnet und mit dem Druckfühler (50) verbunden ist, sowie ein flexibles, in die Druckkammer (40) hineinragendes Federgehäuse (44), das gegen die Druckkammer (40) abgeschlossen ist,

(b) das Absperrglied ein gleichachsig zu dem Ventilkörper (20) gleitbeweglich in dem Ventilgehäuse geführter Druckstößel (46) ist, der mit einer Stirnfläche unter dem Einfluß einer Druckfeder (48) an einem Boden des Federgehäuses (44) anliegt und an dessen andere Stirnfläche sich im Normalzustand der Ventilschließkörper (20) innerhalb der zweiten Kammer (34) unter dem Einfluß der Schließfeder (27) mit einem Anschlagteil (22) anliegt, und

(c) der Ventilschließkörper (20) einen Innenkanal (28) aufweist, dessen eines Ende mit dem Einlaß (2) in Verbindung steht und dessen anderes Ende in dem Anschlagteil (22) mündet und durch die Stirnfläche des Druckstößels (46) bei deren Anlage abdeckbar ist.

3. Sicherheitsventil nach Anspruch 2, dadurch gekennzeichnet, daß das Federgehäuse (44) von einem Wellrohrelement gebildet ist, dessen eines Ende abdichtend an dem Ventilgehäuse befestigt ist und dessen anderes Ende durch einen Deckel (45) abdichtend verschlossen ist.

4. Sicherheitsventil nach einem der Ansprüche 1 bis 3, dadurch gekennzeichnet, daß die Druckkammer (40) ein becherförmiges Gehäuse bildet, dessen geschlossenes Ende an eine Druckkapillare (51) angeschlossen ist und dessen offenes Ende mittels eines Ringflansches (39) mit einer Überwurfmutter (38) an dem Ventilgehäuse befestigt ist.

5. Sicherheitsventil nach Anspruch 2, dadurch gekennzeichnet, daß der Druckstößel (46) an seinem ersten Ende mit einer Dichtfläche (47) versehen ist.

6. Sicherheitsventil nach einem der vorhergehenden Ansprüche, dadurch gekennzeichnet, daß ein die zweite Kammer (34) begrenzender Anschlußkörper (31) mit einem Anschlußteil (1) des Ventilgehäuses fest aber lösbar verbunden ist und der Temperaturfühler (50) mit der Druckkammer (40) einen mit dem Abschlußkörper (31) fest aber lösbar verbundenes Bauteil bildet.

7. Sicherheitsventil nach Anspruch 6, dadurch gekennzeichnet, daß der Abschlußkörper (31) becherförmig ausgebildet und mit dem Anschlußteil (1) verschraubt ist, daß die Membran (24) zwischen die Stirnseite des Anschlußkörpers (31) und die Stirnseite eines dem Ventilsitz (11) bildenden Einsatzes (10) eingespannt ist und daß der Ventilschließkörper (20) in dem Einsatz (10) abdichtend axial gleitbeweglich geführt ist.

**Claims**

1. Thermally controlled and intrinsically safe safety valve for a hot-water heating installation, which valve opens in case of excess temperature, comprising

(a) a valve housing having an inlet (2) and an outlet (3) and a valve seat (11) located therebetween,

(b) a valve closing body (20) guided in the valve housing, which valve closing body has a valve disc (21) coacting with the valve seat (11),

(c) a closing spring (27) loading the valve closing body (20),

(d) an dilatation body (40) dilatable against the action of the spring (48), which dilatation body is arranged to move the valve closing body (20) in opening direction and to which a temperature sensor (50) of the vapor pressure type is rigidly connected, and

(e) a self-safety device which is arranged to move the valve closing body (20) with the valve disc (21) into an open position when the temperature sensor (50) is defect such that the pressure in the dilatation body (40) breaks down, the valve disc (21) lifted from the valve seat (11),

characterized in that

(f) for forming the self-safety device, the valve closing body (20) is connected to a diaphragm (24), which, in the valve housing, separates a first chamber (26) communicating with the outlet (3) from a second chamber (34), which communicate through a restrictor (35), and

(g) the dilatation body (40) is arranged to control a shut-off member (46), which governs a connection between the inlet (2) and the second chamber (34) and opens this connection when the pressure in the dilatation body (40) breaks down.

2. Safety valve as set forth in claim 1, characterized in that

(a) the dilatation body has a pressure chamber (40) which is arranged at the end of the valve housing remote from the valve seat (11) and connected to the pressure sensor (50), and a flexible spring housing (44) extending into the pressure chamber (40), which spring housing is sealed from the pressure chamber (40),

(b) the shut-off valve is a stem (46) slidingly guided in the valve housing coaxially with the valve body (20), which stem engages with an end face a bottom of the spring housing (44) under the action of a compression spring (48), the valve closing body (20) engaging, in normal state, with a stop member (22) the other end face within the second chamber (34) under the action of the closing spring (27), and

(c) the valve closing body (20) has an inner passage (28), one end of which communicates with the inlet (2) and the other end of which ends in the stop member (22) and is adapted to be covered by the end face of the stem (46) when it is in engagement.

3. Safety valve as set forth in claim 2, characterized in that the spring housing (44) is formed by a corrugated pipe, one end of which is sealingly attached to the valve housing and the other end is sealingly closed by a cover (45).

4. Safety valve as set forth in anyone of the claims 1 to 3, characterized in that the pressure chamber (40) forms a cup-shaped housing, the closed end of which is connected to a pressure capillary tube (51) and the open end of which is attached to the valve housing by means of an annular flange (39) with a cap nut (38).

5. Safety valve as set forth in claim 2, characterized in that the stem (46) is provided with a sealing surface (47) at its first end.

6. Safety valve as set forth in anyone of the proceeding claims, characterized in that a closure body (31) limiting the second chamber (34) is connected rigidly but detachably to a connecting part (1) of the valve housing and the temperature sensor (50) forms, together with the pressure chamber (40), a component connected rigidly but detachably to the closure body (31).

7. Safety valve as set forth in claim 6, characterized in that the closure body (31) is cup-shaped and screwed to the connecting part (1), that the diaphragm (24) is clamped between the end face of the connecting body (31) and the end face of an insert (10) forming the valve seat (11) and that the valve closing body (20) is axially sealingly guided for sliding movements in the insert (10).

**Revendications**

1. Soupape à sécurité intrinsèque commandée thermiquement, pour une installation de chauffage à eau chaude, qui ouvre en cas de température supérieure, comprenant

(a) un boîtier de soupape avec une entrée (2) et une sortie (3) et avec un siège de soupape (11) interposé,

(b) un corps de fermeture de soupape (20) guidé dans le boîtier de soupape et pourvu d'une tête de soupape (21) coopérant avec le siège de soupape (11),

(c) un ressort de fermeture (27) chargant le corps de fermeture de soupape (20),

(d) un corps de dilatation (40) dilatable contre l'effet d'un ressort (48), et disposé de sorte qu'il actionne le corps de fermeture de soupape (20) en direction d'ouverture, et auquel un capteur de température (50) fonctionnant sur la base de pression de vapeur, est rigidement relié, et

(e) une disposition à sécurité intrinsèque disposée de sorte qu'en cas de défaillance du capteur de température (50) provoquant l'effondrement de la pression dans le corps de dilatation (40), elle actionne le corps de fermeture de soupape (20) avec la tête de soupape (21) dans une position ouverte dans laquelle la tête de soupape (21) est levée du siège de soupape,

caractérisée par le fait que

(f) afin de former la disposition à sécurité intrinsèque, le corps de fermeture de soupape (20) est relié à un diaphragme (24) qui sépare, dans le boîtier de soupape, une première chambre (26) reliée à la sortie (3), et une deuxième chambre (34), qui sont reliées par l'intermédiaire d'un étrangleur (35), et

(g) le corps de dilatation (40) est disposé de sorte qu'il commande un élément de fermeture (46) qui gouverne une connexion entre l'entrée (2) et la deuxième chambre (34) et qui ouvre cette connexion en cas d'effondrement de la pression dans le corps de dilatation (40).

2. Soupape de sécurité selon la revendication 1, caractérisée par le fait que

(a) le corps de dilatation présente une chambre de pression (40), disposée au bout du boîtier de soupape opposé au siège de soupape (11) et relié au capteur de pression (50), ainsi qu'un boîtier de ressort flexible (44) qui s'étend dans la chambre de pression (40) et qui est fermé contre la chambre de pression (40),

(b) l'élément de fermeture est une tige (46) guidée de manière glissante dans le boîtier de soupape, coaxialement au corps de soupape (20), et qui est appliquée avec un front, au fond du boîtier de ressort (44), sous l'action d'un ressort de pression (48), le corps de fermeture de soupape (20) étant appliqué, en état normal, avec un élément de butée (22) à l'autre front dans la deuxième chambre (34) sous l'action du ressort de fermeture (27), et

(c) le corps de fermeture de soupape (20) présente un canal intérieur (28) dont l'un des bouts est relié à l'entrée (2) et dont l'autre bout débouche dans l'élément de butée (22), quel bout peut être couvert par le front de la tige (46) lorsqu'elle est appliquée.

3. Soupape de sécurité selon la revendication 2, caractérisée par le fait que le boîtier de ressort (44) est formé par un élément de tube ondulé dont l'un des bouts est fixé de manière étanchante au boîtier de soupape, et dont l'autre bout est étanchement fermé par un couvercle (45).

4. Soupape de sécurité selon l'une quelconque des revendications 1 à 3, caractérisée par le fait que la chambre de pression (40) forme un boîtier en forme de coupe dont le bout fermé est raccordé à un tube capillaire de pression (51), et dont le bout ouvert est fixé, moyennant une flasque annulaire (39), avec un écrou-raccord (38) au boîtier de soupape.

5. Soupape de sécurité selon la revendication 2 caractérisée par le fait que la tige (46) est pourvue, d'une surface d'étanchéité (47) à son premier bout.

6. Soupape de sécurité selon l'une quelconque des revendications, caractérisée par le fait qu'un corps de clôture (31) limitant la deuxième chambre (34) est relié de manière fixe mais détachable à un élément de raccord (1) du boîtier de soupape, et que le capteur de température (50) forme, avec la chambre de pression (40) un composant relié de manière fixe mais détachable au corps de clôture (31).

7. Soupape de sécurité selon la revendication 6, caractérisée par le fait que le corps de clôture (31) a une forme de coupe, qu'il est vissé à l'élément de raccord (1), que le diaphragme (24) est tendu entre le front du corps de raccord (31) et le front d'un insert (10) du siège de soupape (11), et que le corps de fermeture de soupape (20) est guidé d'une manière étanche et axialement glissante dans l'insert (10).